# EUROPEAN PATENT APPLICATION

(11) **EP 4 491 325 A1**
(43) Date of publication of application: **15.01.2025**
(21) Application number: 24187320.7
(22) Date of filing: 09.07.2024
(51) Int. Cl.: B23Q 7/04, B27M 1/08, B21D 43/28

(54) **MACHINE FOR CUTTING AND PROCESSING SECTION BARS, IN PARTICULAR MADE OF ALUMINIUM, LIGHT ALLOYS, PVC OR THE LIKE**

(30) Priority: 14.07.2023 IT 202300014805
(71) Applicant: F.O.M. Industrie S.r.l., 47841 Cattolica (IT)
(72) Inventor: LATTANZI, Lorenzo, 47841 CATTOLICA (RN) (IT)
(74) Representative: Studio Torta S.p.A.

(57) **Abstract**

A machine for cutting and processing section bars (2) made of aluminium, light alloys, PVC or the like has a processing station (11) provided with a first operating head (26) to process at least one section bar (2), a cutting station (12) provided with a cutting head (29) to separate at least one component (13) from the section bar (2), and a facing station (14) provided with a second operating head (32) to process one end of the component (13) and/or one end of the section bar (2) and further provided with at least two pick-up clamps (40) configured to grab and hold the component (13).

## Description

### CROSS-REFERENCE TO RELATED APPLICATIONS

This patent application claims priority from Italian patent application no. 102023000014805 filed on July 14, 2023, the entire disclosure of which is incorporated herein by reference.

### TECHNICAL FIELD

The present invention relates to a machine for cutting and processing section bars, in particular made of aluminium, light alloys, PVC or the like.

### BACKGROUND

It is known in the field of cutting and processing section bars made of aluminium, light alloys, PVC or the like to provide a machine of the type comprising an elongated base extending in a first horizontal direction; a processing station obtained along the base and provided with a first operating head to process at least one section bar; a cutting station obtained along the base and provided with a cutting head to separate at least one component from the section bar; and a facing station, which is obtained along the base, and is provided with a second operating head to process one end of the component and/or one end of the section bar.

Generally, the facing station is provided with a pick-up clamp configured to hold the component separated from the section bar in the cutting station and feed it along the base in the first direction.

The machine further comprises a feeding device configured to hold a rear end of the section bar and to feed it at least through the processing station and the cutting station in the first direction; a loading station to feed the section bars to the feeding device in a second horizontal direction transverse to the first direction; and an unloading station to unload the components from the pick-up clamp of the facing station in the second direction.

Known machines for cutting and processing section bars of the type described above have some drawbacks mainly deriving from the fact that the presence of a single pick-up clamp in the facing station causes relatively long and complex operating cycles characterized by relatively limited flexibility and versatility.

### SUMMARY

The object of the present invention is to provide a machine for cutting and processing section bars, in particular made of aluminium, light alloys, PVC or the like, which does not have the drawbacks described above and is simple and inexpensive to manufacture.

According to the present invention, there is provided a machine for cutting and processing section bars, in particular made of aluminium, light alloys, PVC or the like, as claimed in the appended claims.

### BRIEF DESCRIPTION OF THE DRAWINGS

The present invention will now be described with reference to the accompanying drawings, which illustrate a non-limiting example of embodiment thereof, wherein:
Fig 1 is a schematic perspective view, with parts removed for clarity, of a preferred embodiment of the machine for cutting and processing section bars of the present invention;

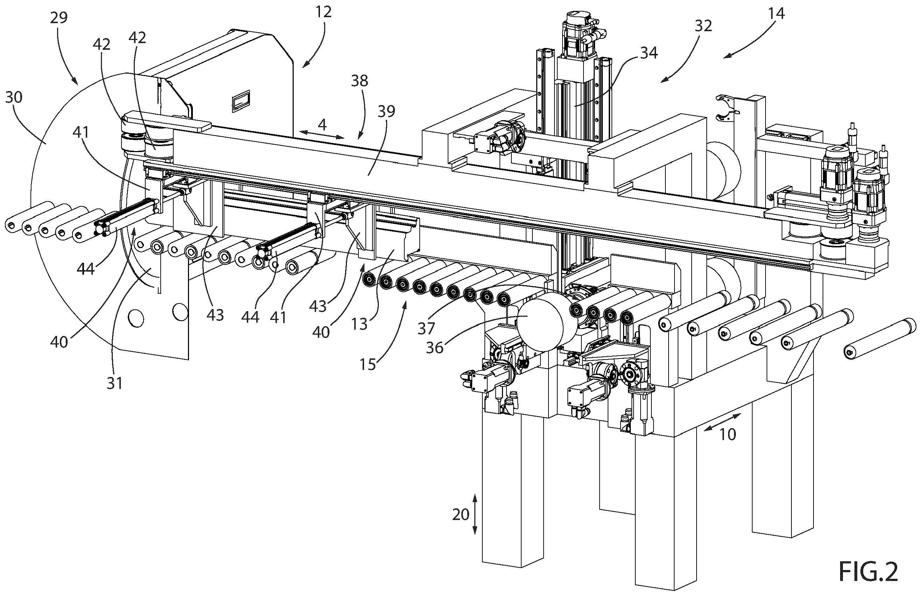

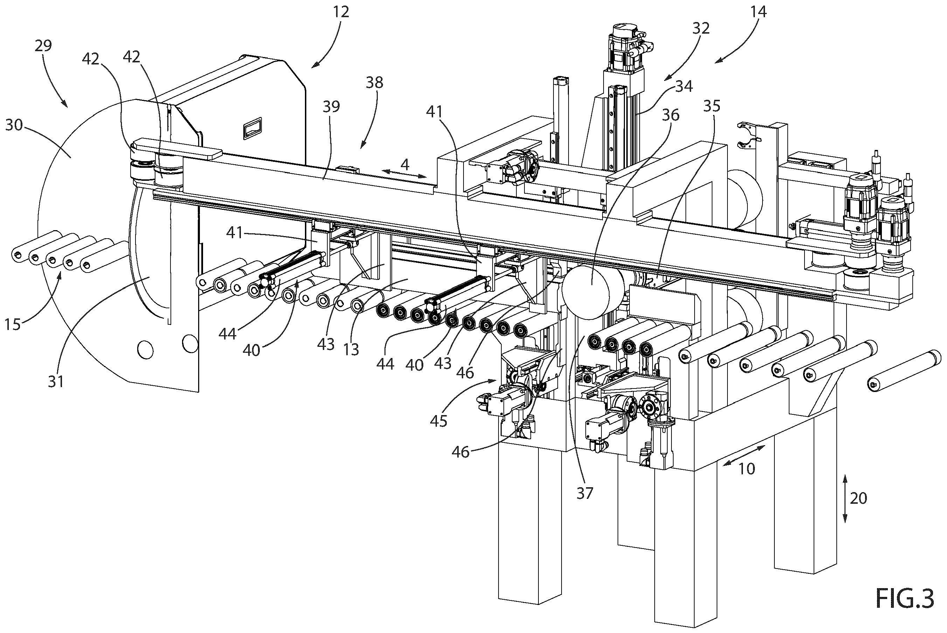

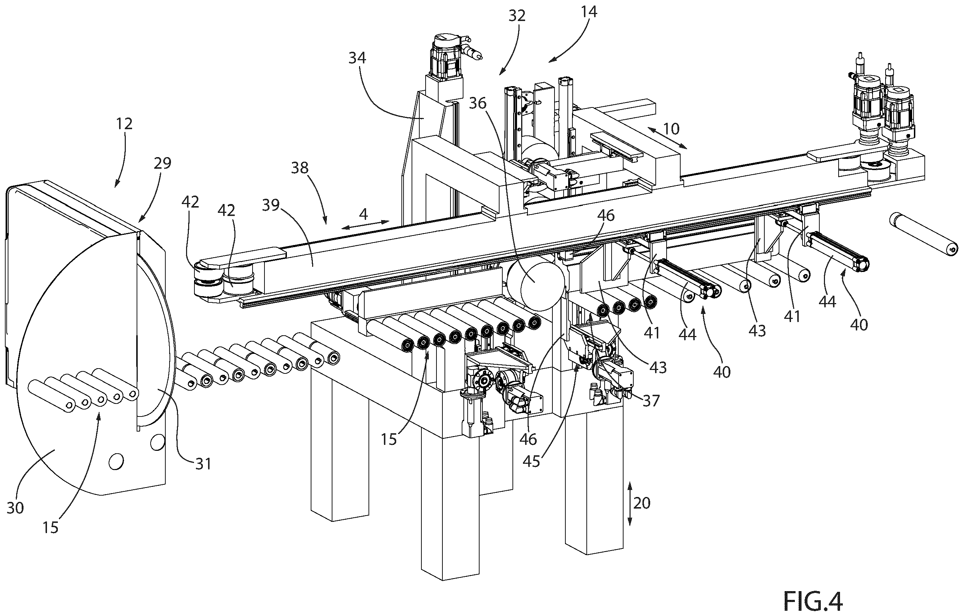

Figs. 2, 3, and 4 are three schematic perspective views, with parts removed for clarity, of a detail of the machine of Fig. 1 shown in three different operating positions; and

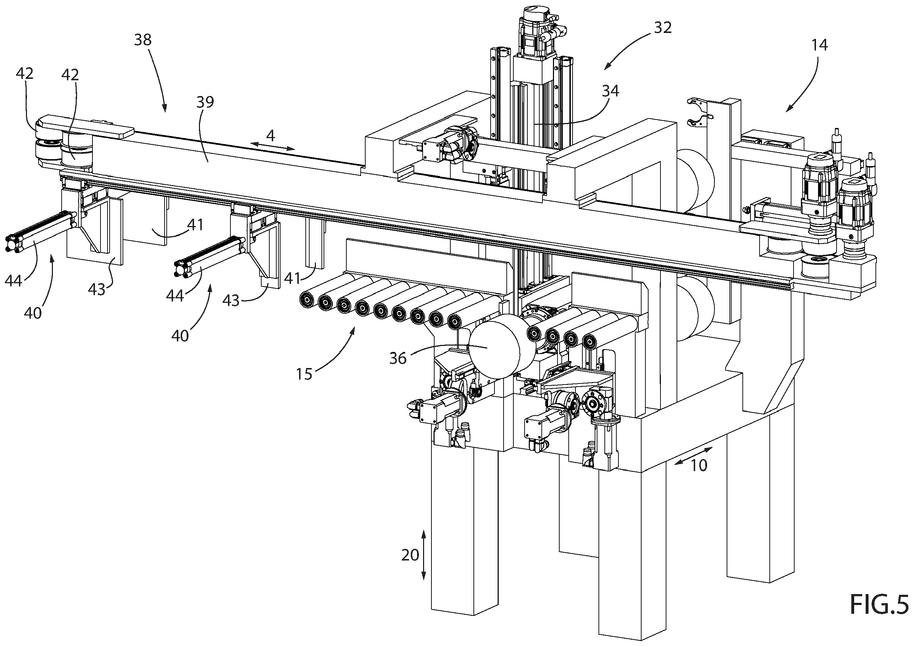

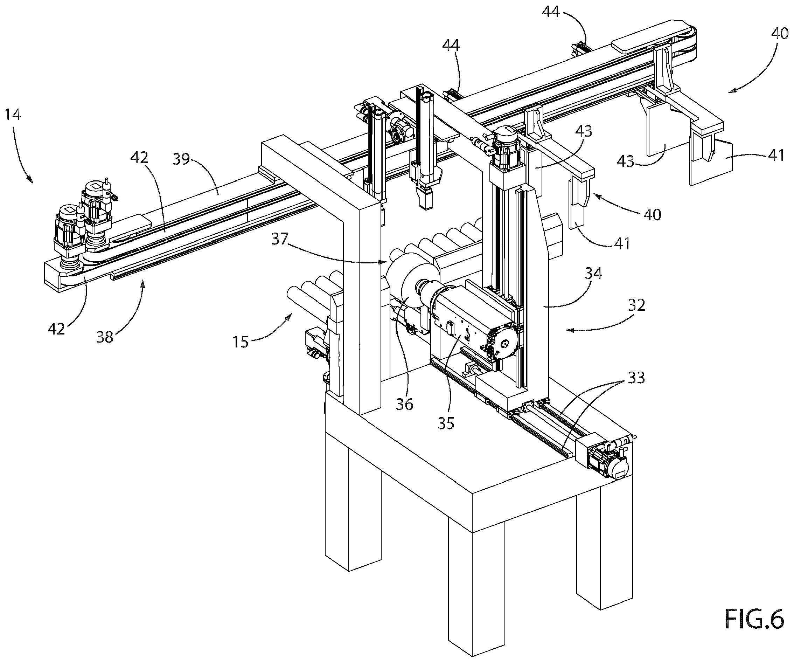

Figs. 5 and 6 are two schematic perspective views, with parts removed for clarity, of a detail of Figs. 2, 3, and 4 shown in two different operating positions.

### DESCRIPTION OF EMBODIMENTS

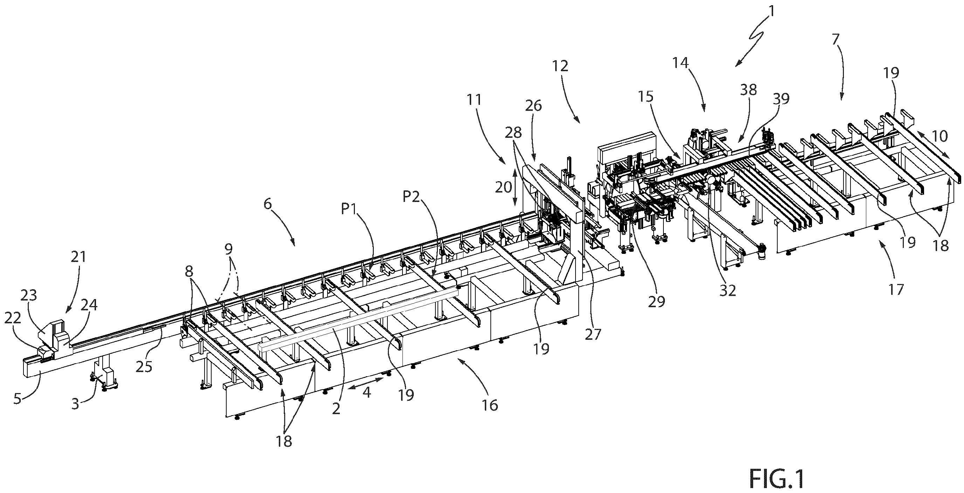

With reference to Fig. 1, the reference number 1 indicates, as a whole, a machine for cutting and processing section bars 2 made of aluminium, light alloys, PVC or the like having an elongated shape.

The machine 1 comprises an elongated base 3, which extends in a horizontal direction 4, and is provided with a longitudinal guide member 5 parallel to the direction 4.

The machine 1 further comprises two roller support devices 6, 7 mounted in succession along the base 3.

Each device 6, 7 has a plurality of lower rollers 8, which are mounted to rotate around respective rotation axes 9 substantially parallel to each other and to a horizontal direction 10 transverse to the direction 4, and define a lower support surface P1.

The machine 1 is further provided with a processing station 11 to process the section bars 2, a cutting station 12 to separate at least one component 13 from each section bar 2, and a facing station 14 to process an end of the component 13 and/or an end of the section bar 2.

The stations 11, 12, and 14 are arranged in succession and in order along the base 3, are mounted between the devices 6, 7, and are associated with a roller support device 15 connected to the devices 6, 7.

The machine 1 is further provided with a loading station 16 of the section bars 2 on the device 6 and with an unloading station 17 of the components 13 from the device 7.

Each station 16, 17 comprises a belt conveyor 18, which is facing the relevant device 6, 7 in the direction 10, and in turn comprises a plurality of conveyor belts 19, which are parallel to one another and to the direction 10, and define a lower support surface P2.

The rollers 8 are movable in a vertical direction 20 orthogonal to the directions 4 and 10 between a raised operating position, in which the surface P1 extends above the surface P2, and a lowered rest position, in which the surface P1 extends below the surface P2.

The section bars 2 are moved by a feeding device 21 along the surface P1 of the device 6 in the direction 4 and through at least the stations 11 and 12, preferably through the stations 11, 12, and 14.

The device 21 comprises a first horizontal slide 22 coupled to the member 5 in a sliding manner to perform, relative to the base 3, rectilinear movements along the member 5 in the direction 4; a second horizontal slide 23 coupled to the horizontal slide 22 in a sliding manner to perform, relative to the horizontal slide 22, rectilinear movements in the direction 10; and a vertical slide 24 coupled to the horizontal slide 23 in a sliding manner to perform, relative to the horizontal slide 23, rectilinear movements in the direction 20.

The vertical slide 24 has an elongated shape, extends in the direction 4, and supports a pick-up member 25 connected to a free end of the vertical slide 24.

The member 25 is coupled to the vertical slide 24 in a rotating manner to rotate, relative to the vertical slide 24, around a rotation axis (not shown) parallel to the direction 4, and comprises two jaws (not shown) movable between a clamping position and a release position of the section bars 2.

The processing station 11 is provided with an operating head 26 of known type, comprising an annular frame 27, which extends around a feed path of the section bars 2 in the direction 4, and supports a plurality of electrospindles 28 mounted on the frame 27 parallel to the directions 4 and 10.

The cutting station 12 is provided with a cutting head 29 of known type comprising a limit stop box body 30 arranged so as to ensure a correct positioning of the section bars 2 in the direction 10, and a cutting blade 31, which is mounted to be oriented around a rotation axis (not shown) parallel to the direction 10, and is movable in the direction 10 so as to protrude from the body 30 and separate at least one component 13 from each section bar 2.

The facing station 14 is provided with an operating head 32 comprising a guide device 33 mounted on the base 3 parallel to the direction 10, a vertical upright 34 engaged on the device 33 in a sliding manner to carry out rectilinear movements away from and towards the roller support device 15 in the direction 10, and an electrospindle 35 mounted on the upright 34.

The electrospindle 35 is arranged parallel to the direction 10, is coupled to the upright 34 in a sliding manner to carry out rectilinear movements in the direction 20, and supports a circular milling tool 36 configured to move in the direction 20 through an opening 37 obtained in the device 15 and carry out facing of the ends of the section bars 2 and/or of the ends of the components 13.

The station 14 is further provided with a pick-up and transport assembly 38 comprising a longitudinal guide member 39, which extends in the direction 4, is mounted on the opposite side of the upright 34 and of the cutting head 29 relative to the device 15, and at least partly faces the cutting head 29.

According to a variant, not shown, the member 39 extends above the device 15, and at least partly faces the cutting head 29.

The member 39 supports two pick-up clamps 40, each of which comprises a first jaw 41, which is coupled to the member 39 in a sliding manner, protrudes from the member 39 above the device 15 in the direction 10, and is attached to a belt conveyor 42 mounted on the member 39.

Each clamp 40 is moved by the relevant conveyor 42 along the member 39 independently from the other clamp 40 during a step of tooling the assembly 38 and together with the other clamp 40 during an operating cycle of the assembly 38 and of the operating head 32.

Each clamp 40 further comprises a second jaw 43, which is movable between a clamping position and a release position of a component 13 under the thrust of an actuator cylinder 44 fixed to the jaw 41 parallel to the direction 10.

The clamps 40 are configured to hold the component 13 so as to allow a lower face of the component 13 to be arranged in contact with the device 15.

Finally, the station 14 is provided with a locking clamp 45, which is movable in the direction 10 relative to the member 39, and comprises two jaws 46, which are movable relative to one another in the direction 20 between a clamping position and a release position of the section bar 2 or of the component 13.

In use, the clamps 40 of the pick-up and transport assembly 38 grab and hold firstly the section bar 2 during cutting of the component 13 and, subsequently, the component 13 after the cutting step.

With regard to the description above, it should be specified that the clamps 40 grab the component 13 in the vicinity of its free ends so as to stabilize it in the direction 10, and that the clamp 45 stabilizes the component 13 in the direction 20 during processing of the free ends of the component 13 by means of the operating head 32.

Finally, the component 13 is firstly fed by the clamps 40 of the assembly 38 on the rollers 8 of the roller support device 7, is then transferred onto the belt conveyor 18 of the station 17 and, finally, is fed by the conveyors 18 in the direction 10 and unloaded from the machine 1.

## Claims

1. A machine for cutting and processing section bars (2), in particular made of aluminium, light alloys, PVC or the like, the machine comprising an elongated base (3) extending in a first horizontal direction (4); a processing station (11) obtained along the base (3) and provided with a first operating head (26) to process at least one section bar (2); a cutting station (12) obtained along the base (3) and provided with a cutting head (29) to separate at least one component (13) from the section bar (2); a facing station (14), which is obtained along the base (3), is provided with a second operating head (32) to process at least one end of the component (13) and/or one end of the section bar (2) and is further provided with a pick-up and transport assembly (38) for the component (13); and a feeding device (21) to move the section bar (2) along the base (3) and at least through said processing and cutting stations (11, 12) in the first direction (4); and being **characterized in that** the pick-up and transport assembly (38) comprises at least two pick-up clamps (40) configured to grab and hold the component (13).

2. The machine according to claim 1, wherein the pick-up clamps (40) are movable independently of one another in the first direction (4) during a set-up phase of the pick-up and transport assembly (38).

3. The machine according to claim 1 or 2, wherein said processing, cutting and facing stations (11, 12, 14) are arranged one after the other, in this order, along the base (3) in the first direction (4).

4. The machine according to any one of the preceding claims, wherein the facing station (14) further comprises a roller support device (15) defining a lower support surface for the component (13); the pick-up clamps (40) being configured to hold the component (13) in the area of two side faces and to move the component (13) in the first direction (4) with a lower surface in contact with the roller support device (15).

5. The machine according to any one of the preceding claims, wherein the facing station (14) further comprises a longitudinal guide member (39), which extends in the first direction (4) and is engaged by the pick-up clamps (40) in a sliding manner.

6. The machine according to claim 5, when it depends on claim 4, wherein the longitudinal guide member (39) is arranged on the side opposite the cutting head (29) relative to the roller support device (15) and at least partly faces the cutting head (29) .

7. The machine according to claim 5, when it depends on claim 4, wherein the longitudinal guide member (39) extends above the roller support device (15).

8. The machine according to any one of the preceding claims, wherein the facing station (14) further comprises a vertical upright (34), which is movable, relative to the base (3), in a second direction (10), which is transverse to the first direction (4); the second operating head (32) being mounted so as to move along the vertical upright (34) in a third direction (20), which is orthogonal to said first and second directions (4, 10).

9. The machine according to claims 4, 5 and 8, wherein the longitudinal guide member (39) and the vertical upright (34) are substantially arranged on opposite sides of the roller support device (15) in the second direction (10); the pick-up clamps (40) projecting from the longitudinal guide member (39) in the second direction (10).

10. The machine according to any one of the preceding claims, wherein each pick-up clamp (40) comprises two pick-up jaws (41, 43), which are movable relative to one another in a second horizontal direction (10), which is transverse to the first direction (4), between a clamping position and a release position clamping and releasing the component (13); the facing station (14) being further provided with a locking clamp (45) comprising two locking jaws (46), which are movable relative to one another in a third vertical direction (20), which is transverse to the first direction (4), between a clamping position and a release position clamping and releasing the component (13).
